# FASCICULE DE BREVET EUROPEEN

(11) **EP 3 418 081 B1**
(45) Date de publication et mention de la délivrance du brevet: **07.04.2021**
(21) Numéro de dépôt: 18176625.4
(22) Date de dépôt: 07.06.2018
(51) Int. Cl.: B60C 23/04

(54) **DISPOSITIF DE SURVEILLANCE DE ROUE**
RADÜBERWACHUNGSVORRICHTUNG
WHEEL MONITORING DEVICE

(30) Priorité: 19.06.2017 FR 1755559
(43) Date de publication de la demande: 26.12.2018
(73) Titulaire: LDL Technology, 31520 Ramonville Saint Agne (FR)
(72) Inventeur: LUCE, Dominique, 31210 Bordes-de-Rivières (FR)
(74) Mandataire: Godard, Xavier

(56) Documents cités:
- EP-A1- 0 417 712
- DE-U1-202016 101 336
- US-A1- 2004 055 371
- US-A1- 2004 155 763

## Description

### DOMAINE D'APPLICATION DE L'INVENTION

La présente invention a trait au domaine des dispositifs de surveillance des roues notamment ceux utilisés dans les systèmes de surveillance de la pression des pneumatiques ou de surveillance des pneumatiques.

### DESCRIPTION DE L'ART ANTÉRIEUR

Il existe des systèmes électroniques conçus pour surveiller des caractéristiques telles :
- la pression des pneumatiques,
- la température du pneumatique,
- l'accélération des roues d'un véhicule,
- etc...

La mise en oeuvre de tels systèmes passe par l'association d'un ou plusieurs capteurs positionnés sur chaque roue (le plus souvent dans le pneumatique), qui mesure les caractéristiques souhaitées et transmet les informations correspondantes à un module de réception associé au châssis du véhicule.

Ce capteur se présente classiquement sous la forme d'un boîtier contenant une carte électronique et une batterie d'alimentation de ladite carte. Ladite carte électronique comprend classiquement un module de prise de mesure et un module d'émission de l'information mesurée incluant une antenne.

La fixation dudit boîtier à la jante fait l'objet de plusieurs solutions techniques. Une de ces solutions consiste à fixer ledit boîtier à la valve de la roue.

Un exemple d'une telle solution est décrit dans le document EP1647422. Ce document décrit le montage d'un boîtier de détection à l'intérieur d'un pneumatique du type de celui venant se fixer au corps d'une valve. Ce montage comprend les éléments suivants :
- un boîtier de détection accueillant des composants de détection,
- un corps de valve,
- un moyen d'étanchéité de type joint venant assurer l'étanchéité entre le corps de valve et la jante,
- un moyen de maintien en position du corps de valve sur la jante, laquelle est préformée d'un orifice de liaison prévu à cet effet, ledit moyen de maintien étant séparé dudit boîtier de détection,
- un module de liaison du boîtier de détection avec le corps de valve.

Ce montage était remarquable en ce qu'au moins un des éléments dudit montage, en dehors du moyen d'étanchéité, était préformé de façon à ce qu'une partie de cet élément vienne pénétrer dans l'orifice de liaison afin d'y prendre appui lorsque le montage est soumis à des contraintes tangentielles.

Un tel montage apportait une solution au problème de déformation du joint du fait du report de contraintes subies par le boîtier lors des accélérations. Il proposait en outre une solution de serrage sans écrou extérieur.

Lesdites contraintes sont en partie issues de la masse du boîtier. En effet, ce dernier qui accueille ladite carte électronique et la batterie d'alimentation de ladite carte est en outre rempli d'une matière polymère pour des raisons d'étanchéité et de maintien en position. Cette matière a pour inconvénient de constituer une masse non négligeable.

De plus, l'opération de remplissage par une matière polymère du volume laissé libre dans le boîtier, une fois la carte électronique et la batterie positionnées à l'intérieur, présente des difficultés. Une difficulté réside dans le fait qu'il est difficile de remplir sans créer de bulles d'air un volume parallélépipédique dont le fond est occupé par la carte électronique. En effet, la carte constitue alors un obstacle au remplissage. Un mauvais remplissage peut avoir des conséquences négatives sur la prise de mesure ou sur l'émission du fait de la variation de la permittivité relative du milieu environnant la carte électronique.

Un autre inconvénient de ce montage est qu'il nécessitait la réalisation d'éléments constitutifs complexes le rendant onéreux telles des pièces en aluminium produites en décolletage D'autres documents de l'art antérieur peuvent être aussi cités, tels US 2004/055371 A1, US 2004/155763 A1, EP 0 417 712 A1 et DE 20 2016 101336 U1.

### DESCRIPTION DE L'INVENTION

Partant de cet état de fait et d'un cahier des charges préétabli, la demanderesse a mené des recherches visant à optimiser la conception d'un dispositif de surveillance de roue afin de le simplifier et d'en diminuer le coût de fabrication.

Ces recherches ont abouti à la conception et à la réalisation d'un dispositif de surveillance de roue, ladite roue comprenant un pneumatique monté sur une jante équipée d'une valve comprenant une portion externe et une portion interne débouchant dans le pneumatique,
ledit dispositif étant du type de celui comprenant un boîtier ménagé d'une âme creuse accueillant différents composants dont une carte électronique et une batterie d'alimentation de ladite carte,
ladite carte électronique comprenant une pluralité de modules fonctionnels dont un module de prise de mesure et un module d'émission de l'information mesurée incluant une antenne,
ledit boîtier étant positionné à l'intérieur du pneumatique et fixé à la portion interne de ladite valve au moyen d'une liaison vissée,
une matière polymère venant remplir le volume libre.

Ce dispositif est remarquable en ce que
le boîtier est préformé de façon à proposer au moins deux plans d'accueil différents parallèles superposés sur lesquels se répartissent les différents composants,
ledit boîtier étant préformé d'une ouverture latérale pour autoriser le glissement latéral des différents composants dans leur plan d'accueil respectif.

Cette caractéristique est particulièrement avantageuse en ce qu'une configuration superposée permet la conception d'un boîtier présentant un encombrement inférieur. En effet, la disposition superposée permet de diminuer la surface nécessaire à l'accueil des habituels composants implémentés dans un boîtier de dispositif de surveillance de roue. Cet encombrement inférieur a pour conséquence une masse inférieure ainsi qu'un volume de polymère de remplissage inférieur. Le boîtier de l'invention est donc non seulement plus petit mais également plus léger. En nécessitant moins de matière il devient moins onéreux.

La configuration superposée proposée définit en outre un montage par glissement latéral de la carte électronique et de la batterie et en conséquence la création d'une ouverture latérale dans les parois du boîtier.

Cette ouverture latérale facilite non seulement le positionnement des différents composants dont la carte et de la batterie mais également l'opération de remplissage des volumes libres cloisonnés par les parois et les composants accueillis par de la matière polymère. En effet, la buse de remplissage dispose d'un accès total à chaque volume libre sans que le plan d'accueil de la carte ou de la batterie ne s'interpose et fasse obstacle au passage du polymère de remplissage. La matière polymère est donc coulée par cette ouverture latérale le long du plan de la carte électronique et de la batterie ce qui limite le piégeage des bulles lors du remplissage. La qualité du boîtier et son temps de réalisation sont ainsi améliorés.

De plus, la réduction des dimensions de l'ouverture nécessaire à l'accueil des composants à une face du boîtier participe à la rigidité de ce dernier.

Selon une autre caractéristique particulièrement avantageuse de l'invention, ledit boîtier est préformé de façon à proposer deux plans d'accueil différents parallèles superposés,
un premier plan d'accueil accueillant la carte électronique et un deuxième plan d'accueil accueillant la batterie. L'accueil sur deux plans constitue le bon compromis entre la hauteur de l'empilement et la largeur de ce dernier.

Selon une autre caractéristique particulièrement avantageuse de l'invention, ledit boîtier est préformé d'une ouverture latérale pour autoriser le glissement latéral vers l'axe de la valve de la carte électronique et de la batterie dans leur plan d'accueil respectif.

Afin de garantir le maintien de la carte électronique et d'autres composants dans l'âme creuse du boîtier, ledit boîtier est, selon une autre caractéristique particulièrement avantageuse de l'invention, préformé pour que les plans d'accueil présentent un angle inférieur à 90 degrés par rapport à l'axe de la valve. La force centrifuge contribue au maintien et donc évite une éventuelle libération. L'accueil des différents composants peut ainsi être réalisé par glissement latéral sans verrouillage. Cet angle est défini entre l'axe de la portion interne de la valve et les plans d'appui. Selon un mode de réalisation préféré mais non limitatif, l'angle est inférieur à 85 degrés.

En présentant une masse inférieure, les éléments participant à son montage peuvent être également optimisés. Ainsi, selon une autre caractéristique particulièrement avantageuse de l'invention, ledit boîtier est préformé d'un manchon ménagé d'une âme creuse cylindrique venant s'emmancher sur la portion interne de la valve,
ledit manchon comprend deux extrémités débouchantes, une première extrémité débouchante venant en appui contre la surface de la jante une fois le manchon emmanché sur la portion interne de la valve,
la portion interne de la valve est ménagée d'une âme creuse filetée,
une vis équipée d'une tête venant se visser dans ladite âme creuse filetée et prendre appui au moyen de sa tête sur la deuxième extrémité débouchante dudit manchon de façon à maintenir ladite première extrémité débouchante en appui contre la jante et fixer ainsi le boîtier à cette dernière. Cette conception de montage est simple et peu onéreuse. Aucune contre pièce usinée ou surmoulée n'est nécessaire. La vis disposée radialement par rapport à l'axe de roue vient prendre en sandwich le manchon du boîtier entre elle et la valve, l'étanchéité est assurée comme connue de l'art antérieur. L'adaptation à l'épaisseur de la jante se fait par la course de la vis dans le filetage de la valve. La vis est creuse ou percée pour laisser passer l'air.

La réduction de l'encombrement et de la masse autorise la conception d'un montage moins équilibré par rapport à l'axe de la portion interne de la valve à laquelle le boîtier se fixe. Ainsi, selon une autre caractéristique particulièrement avantageuse, ledit boîtier est préformé pour présenter une géométrie allongée avec une extrémité préformée dudit manchon et une deuxième extrémité ouverte pour autoriser le glissement de la carte électronique et de la batterie avant remplissage par une matière polymère. Cette géométrie est simple et facile à fabriquer.

L'adaptation au diamètre du trou de passage de la valve a également fait l'objet d'une étude afin d'éviter de fabriquer un boîtier pour chaque diamètre. Selon une autre caractéristique particulièrement avantageuse de l'invention, la première extrémité débouchante du manchon est préformée d'au moins une encoche avec laquelle coopère au moins une saillie préformée dans une coupelle d'adaptation additionnelle venant, en s'emmanchant sur ladite première extrémité débouchante, élargir la surface d'appui de la première extrémité débouchante contre la jante. Ainsi, la partie principale du dispositif à savoir le boîtier ne change pas, mais des coupelles ajoutées peuvent se fixer au manchon pour permettre la fixation du même boîtier malgré des diamètres de trous différents. Cette coupelle a également une fonction de rehausse isolant thermiquement le boîtier de la jante et facilitant la transmission par ondes radio RF. Elle a pour avantage également d'autoriser l'installation du boîtier de l'invention dans des profils de jante trop étroits pour accueillir ledit boîtier.

Selon une autre caractéristique particulièrement avantageuse de l'invention, une rondelle ressort s'intercale entre la tête de la vis et la deuxième extrémité débouchante du manchon. Ce choix technologique assure une fonction d'anti-desserrage à moindre coût.

Le dispositif de l'invention présente ainsi une configuration de fixation à la valve simplifiée requérant des opérations de décolletage réduites au minimum des pièces en aluminium.

Selon une autre caractéristique particulièrement avantageuse de l'invention, l'âme creuse est préformée de rainures disposées en vis-à-vis pour former un plan d'accueil et les surfaces de glissement pour le positionnement des différents composants, la paroi extérieure du boîtier étant préformée de nervures au niveau desdites rainures. Cette caractéristique participe à la rigidité dudit boîtier.

Afin de permettre au boîtier de supporter les contraintes de la rotation et le serrage sur la jante, ledit boîtier et ladite coupelle sont avantageusement réalisés en polyamide chargé à 50 % en fibres. Ce thermoplastique technique est notamment conçu pour résister à des températures supérieures à 150 degrés Celsius sous charge (température de fléchissement sous charge selon la norme ISO75).

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, un mode de réalisation d'un dispositif conforme à l'invention.

### BRÈVE DESCRIPTION DES DESSINS

La figure 1 est un dessin schématique d'une vue extérieure de côté d'un montage d'un mode de réalisation d'un dispositif conforme à l'invention fixé sur une valve coudée;
La figure 2 est un dessin schématique d'une vue en perspective éclatée du montage de la figure 1 ;
La figure 3 est un dessin schématique d'une vue en perspective éclatée du montage de la figure 1 équipé d'une coupelle additionnelle ;
La figure 4 est un dessin schématique d'une vue de côté en coupe du montage de la figure 1 ;
La figure 5 est un dessin schématique d'une vue extérieure de face du montage de la figure 3 ;
La figure 6 est un dessin schématique d'une vue de côté en coupe du montage de la figure 1 monté sur une jante avec le plan de coupe passant par l'axe de la valve coudée ;
La figure 7 est un dessin schématique d'une vue de côté de l'arrière du montage de la figure 1 auquel le remplissage plastique a été retiré ;
La figure 8 est un dessin schématique d'une vue extérieure de côté d'un montage du mode de réalisation du dispositif de la figure 1 fixé sur une valve droite ;
La figure 9 est un dessin schématique du montage de la figure 8 équipé d'une coupelle additionnelle ;
La figure 10 est un dessin schématique d'une vue de face en coupe du montage de la figure 8 monté sur une jante avec le plan de coupe passant par l'axe de la valve droite ;
La figure 11 est un dessin schématique d'une vue de côté en coupe du montage de la figure 8 monté sur une jante avec le plan de coupe passant par l'axe de la valve droite.

### DESCRIPTION D'UN MODE DE RÉALISATION PRÉFÉRÉ

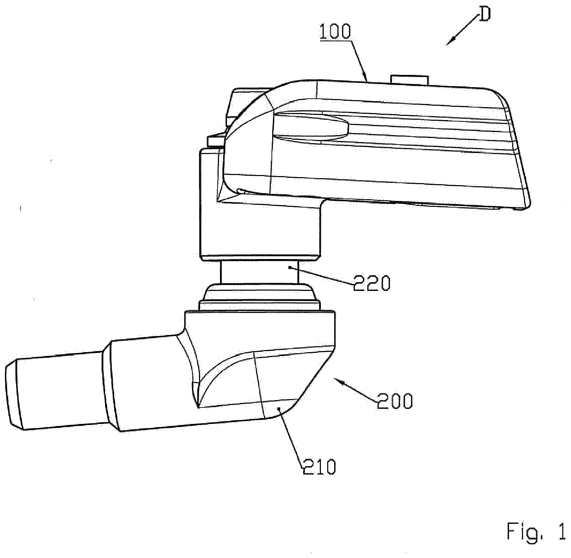

Comme illustré sur les dessins des figures 1, 2 et 4, le dispositif de surveillance de roue référencé D dans son ensemble comprend un boîtier 100 venant se fixer à une valve 200.

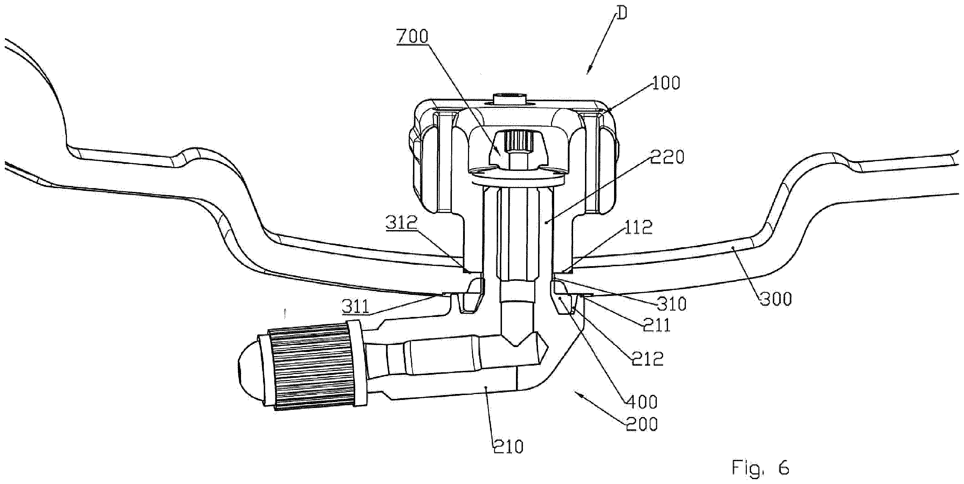

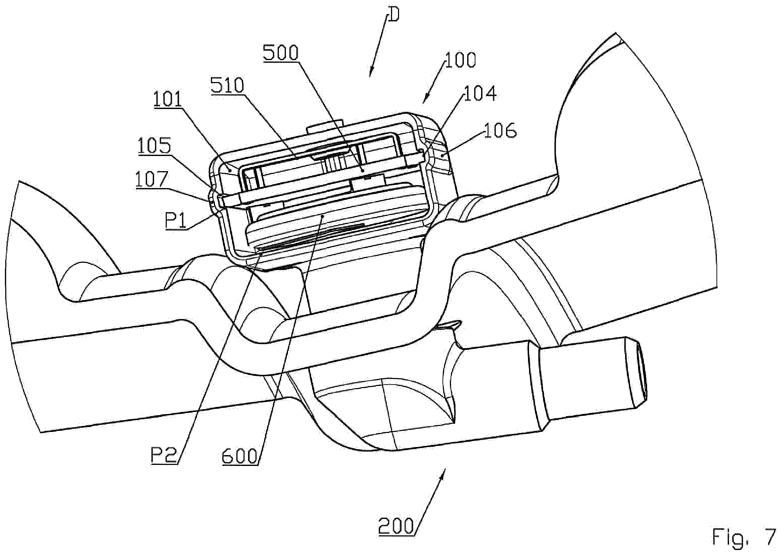

Plus précisément, comme cela est illustré sur les dessins des figures 6 et 7, ladite roue (non illustrée) comprend un pneumatique (non illustré) monté sur une jante 300 ménagé d'un trou traversant 310 autorisant le passage de la valve 200 qui présente ainsi une portion externe 210 accessible de l'extérieur et une portion interne 220 débouchant dans le pneumatique (non illustré).

La portion externe 210 comprend un orifice d'entrée et de sortie de l'air.

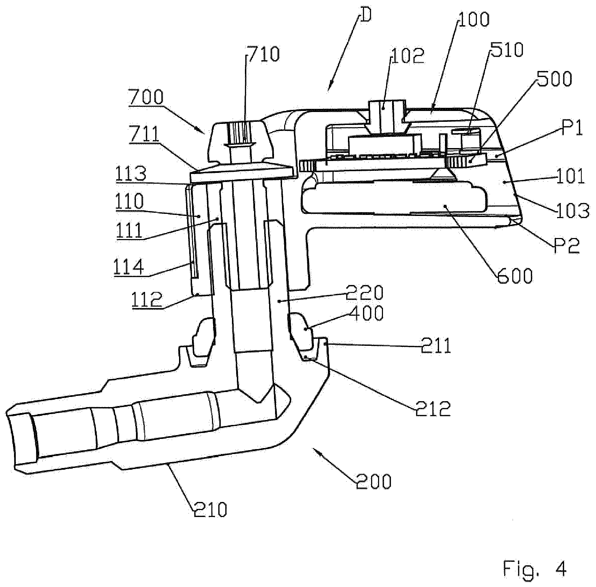

Comme illustrée sur les vues en coupe des figures 4 et 6, la portion interne 220 accueille le boîtier 100 et se présente sous la forme d'un cylindre creux à surface extérieure lisse et dont l'âme creuse est filetée.

Comme illustrées sur le dessin de la figure 6, les faces extérieure et intérieure de la jante 300 sont préformées d'un lamage 311 et 312 autour du trou 310.

Le lamage extérieur 311 sert de surface d'appui à une collerette 211 préformée dans la portion externe 210 de la valve 200. Cette collerette 211 est ménagée dans sa face orientée vers ledit lamage extérieur 311 d'une rainure circulaire 212 accueillant un joint 400 assurant l'étanchéité entre le corps de valve 200 et le trou 310 de la jante 300. Une portion de ce joint 400 s'introduit dans le trou 310 préformé à cet effet.

Le bord externe formé par la collerette 211 de la rainure d'accueil 212 dudit joint 400 vient prendre appui sur ledit lamage extérieur 311 de façon à prendre en compte les contraintes auxquelles est soumis le corps de la valve 200 lors de la rotation de la roue du fait de la présence du dispositif D et éviter ainsi une trop grande déformation du joint 400.

Comme illustré sur les dessins des figures 1, 2 et 4, le boîtier 100 est formé d'un volume utile sensiblement allongé dont une extrémité dite extrémité avant est associée à un module de fixation 110 à la valve 200. Le volume utile ou âme creuse 101 est délimité par une pluralité de parois accueillant une carte électronique 500 et une batterie d'alimentation 600 de ladite carte 500.

Ladite carte électronique 500 se présente sous la forme d'un circuit imprimé supportant une pluralité de modules fonctionnels dont un module de prise de mesure et un module d'émission de l'information mesurée incluant une antenne 510.

Bien que non illustrée pour une meilleure lisibilité des dessins, une matière polymère (polyuréthane) est présente dans tous les volumes libres de l'âme creuse 101 non occupés par ledit circuit imprimé 500 et la batterie 600. Néanmoins, un orifice 102 (cf. figure 4) est ménagé dans la paroi du boîtier 100 afin que le module de prise de mesure puisse être en communication avec l'intérieur du pneumatique à des fins de mesure de la pression tout en étant positionné dans le boîtier 100.

Comme illustré et conformément à l'invention, le boîtier 100 est préformé de façon à proposer dans son âme creuse 101, deux plans d'accueil P1 et P2 pour les différents composants à accueillir.

Ces plans P1 et P2 sont distincts et disposés à des hauteurs différentes de façon parallèle et superposée. Le plan P1 se situe en position haute sensiblement à mi-hauteur entre la paroi supérieure et la paroi inférieure du boîtier 100. Le plan P2 se situe en position basse sensiblement au niveau de la paroi inférieure dudit boîtier 100.

Le premier plan d'accueil P1 accueille la carte électronique 500 alors que le deuxième plan d'accueil P2 accueille la batterie 600.

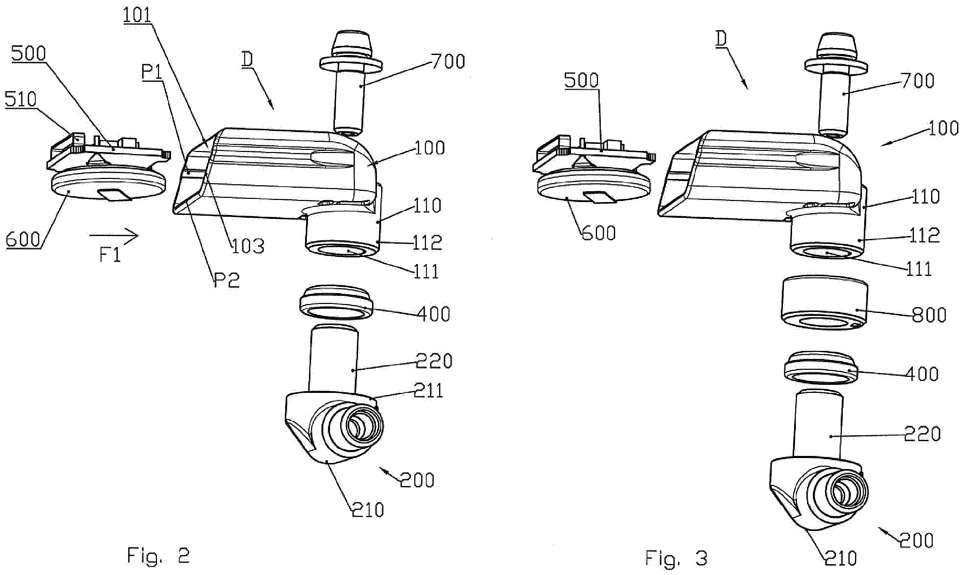

La paroi arrière 103 dudit boîtier 100 est ouverte pour former une ouverture latérale donnant accès à l'âme creuse 101 et pour autoriser le glissement de la carte électronique 500 et de la batterie 600 dans leur plan d'accueil respectif P1 et P2 lors de la fabrication du dispositif D. Ce mouvement de glissement latéral est illustré par la flèche F1 sur le dessin de la figure 2.

Cette ouverture formée par la paroi arrière 103 constitue également le point d'accès pour la buse de remplissage (non illustrée) de matière polymère (polyuréthane). On comprend que cette opération de remplissage requiert un procédé de fabrication original et remarquable en ce qu'il comprend les opérations suivantes :
- glissement des composants dans leur plan d'accueil respectif,
- mise en place d'un bouchon dans l'orifice 102,
- remplissage,
- retrait du bouchon pour autoriser le module de mesure à communiquer avec l'extérieur du boîtier 100, c'est-à-dire avec l'intérieur du pneumatique.

Les figures montrent bien le volume réduit atteint par la configuration superposée définie par l'invention.

Selon le mode de réalisation illustré, le bord de cette paroi arrière ouverte 103 défini par l'extrémité arrière du boîtier suit un plan disposé en biseau par rapport aux parois supérieure et inférieure. Ce biseau évite tout endommagement en cas de contact entre le boîtier 100 et la paroi du pneumatique.

Comme illustré, le boîtier 100 est préformé pour que les plans d'accueil P1 et P2 présentent, selon le mode de réalisation préféré mais non limitatif illustré, un angle égal à 85 degrés par rapport à l'axe de la portion interne 220 de la valve 200.

Comme illustré sur le dessin de la figure 7, pour former le plan d'accueil P1, l'âme creuse 101 est préformée dans ses parois latérales de rainures 104 et 105 disposées en vis-à-vis pour former ledit plan d'accueil P1 et les surfaces de glissement pour le positionnement de la carte électronique 500.

Comme illustrées, les parois latérales longitudinales du boîtier 100 sont préformées extérieurement de nervures de rigidification 106 et 107 au niveau desdites rainures 104 et 105.

Le boîtier 100 est en outre préformé à son extrémité avant d'un manchon constituant le module de fixation 110 à la valve 200. Ce manchon 110 est ménagé d'une âme creuse cylindrique 111 venant s'emmancher sur le cylindre creux à surface extérieure lisse de la portion interne 220 de la valve 200. Le manchon 110 et le volume utile délimité par les parois entourant l'âme creuse 101 du boîtier 100 forment un seul ensemble monobloc fabriqué en thermoplastique en polyamide chargé à 50 % en fibres.

Ledit manchon 110 comprend deux extrémités débouchantes 112 et 113. Une première extrémité débouchante inférieure 112 vient en appui contre le lamage intérieur 312 de la jante 300. Une vis 700 à âme creuse axiale vient se visser dans ladite âme creuse filetée de la portion interne 220 de la valve 200. Cette vis 700 prend appui, au moyen de sa tête 710, sur la deuxième extrémité débouchante supérieure 113 dudit manchon 110 de façon à maintenir ladite première extrémité 112 en appui contre la jante 300 et fixer ainsi le boîtier 100 à cette dernière. La fixation du dispositif D est donc mise en oeuvre par une liaison vissée interne qui ne peut être dévissée de l'extérieur. Comme illustrée, une rondelle ressort 711 s'intercale entre la tête 710 de la vis 700 et la deuxième extrémité 113 du manchon 110.

Selon un mode de réalisation non illustré, ladite deuxième extrémité 113 constitue une surface tronconique d'appui pour accueillir au mieux ladite rondelle ressort 711. Cette rondelle ressort 711 évite tout desserrage.

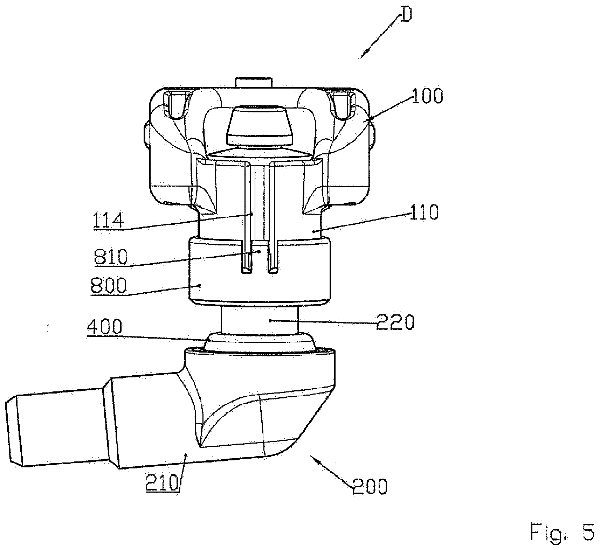

Comme illustré sur le dessin de la figure 5, la première extrémité 112 du manchon 110 est préformée d'au moins une encoche 114 avec laquelle coopère au moins une saillie 810 préformée dans une coupelle d'adaptation additionnelle 800. Comme illustrée sur le dessin de la figure, lorsque cela est nécessaire, cette coupelle 800 vient, en s'emmanchant sur ladite première extrémité 112, élargir la surface d'appui de la première extrémité 112 contre la jante 300. D'autres dimensions de coupelles sont possibles.

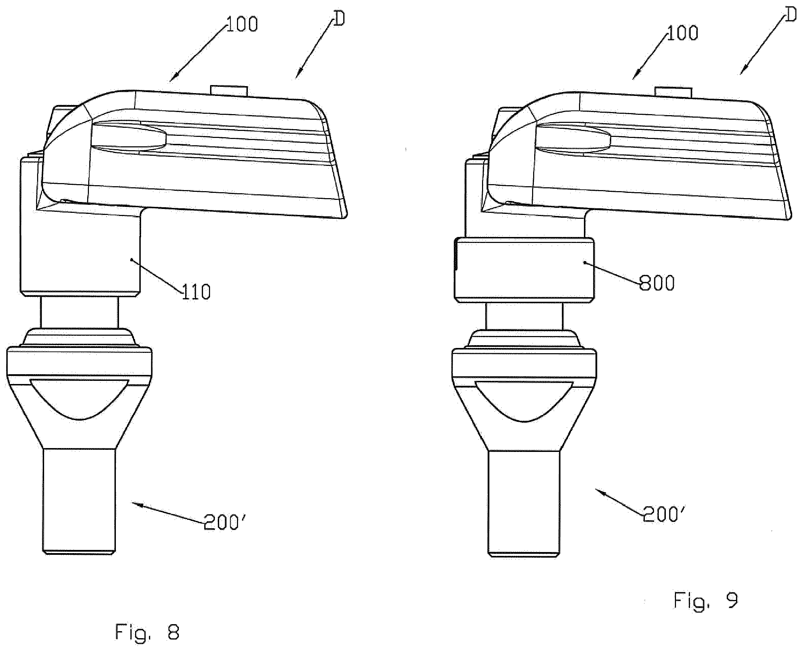

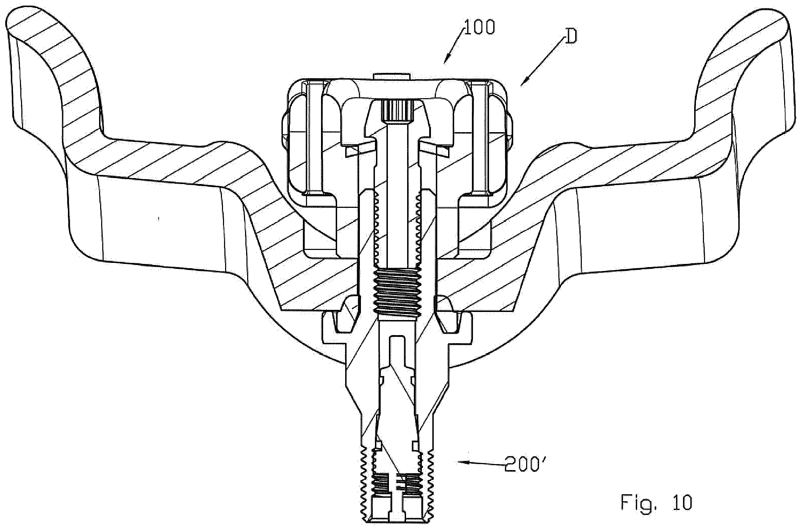

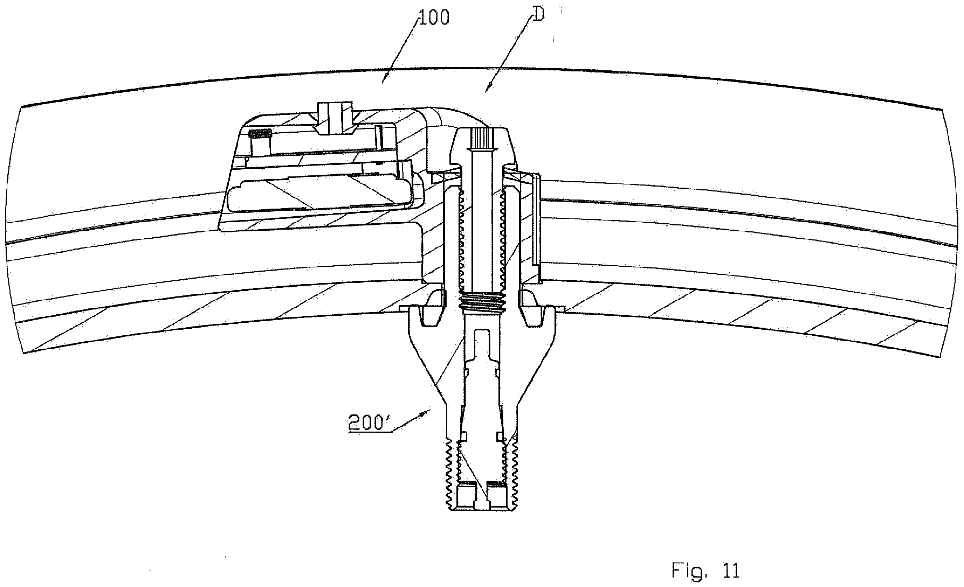

Les dessins des figures 8, 9, 10 et 11 illustrent une autre configuration d'installation du même dispositif D sur une valve 200' droite. Le montage est réalisé sans coupelle pour les dessins des figures 8, 10 et 11 et avec coupelle 800 pour le dessin de la figure 9. Ces dessins ont pour but d'illustrer la capacité du dispositif D à se fixer sur plusieurs types de valve.

On comprend que le dispositif, qui vient d'être ci-dessus décrit et représenté, l'a été en vue d'une divulgation plutôt que d'une limitation. Bien entendu, divers aménagements, modifications et améliorations pourront être apportés à l'exemple ci-dessus, sans pour autant sortir du cadre de l'invention.

## Revendications

1. Dispositif (D) de surveillance de roue,
ladite roue comprenant un pneumatique monté sur une jante (300) équipée d'une valve (200) comprenant une portion externe (210) et une portion interne (220) débouchant dans le pneumatique,
ledit dispositif (D) étant du type de celui comprenant un boîtier (100) ménagé d'une âme creuse (101) accueillant différents composants dont une carte électronique (500) et une batterie (600) d'alimentation de ladite carte (500),
ladite carte électronique (500) comprenant une pluralité de modules fonctionnels dont un module de prise de mesure et un module d'émission de l'information mesurée incluant une antenne (510),
ledit boîtier (100) étant positionné à l'intérieur du pneumatique et fixé à la portion interne (220) de ladite valve (200) au moyen d'une liaison vissée,
une matière polymère venant remplir le volume libre,
le boîtier (100) étant préformé de façon à proposer au moins deux plans d'accueil (P1, P2) différents parallèles superposés sur lesquels se répartissent les différents composants,
ledit boîtier (100) étant préformé d'une ouverture latérale pour autoriser le glissement latéral des différents composants dans leur plan d'accueil respectif (P1, P2),
**CARACTÉRISÉ PAR LE FAIT QUE** ledit boîtier (100) est préformé d'un manchon (110) ménagé d'une âme creuse cylindrique (111) venant s'emmancher sur la portion interne (220) de la valve (200),
ledit manchon (110) comprend deux extrémités débouchantes (112, 113), une première extrémité débouchante (112) venant en appui contre la surface de la jante (300) une fois le manchon (110) emmanché sur la portion interne (220) de la valve (200),
la portion interne (220) de la valve est ménagée d'une âme creuse filetée,
une vis (700) équipée d'une tête (710) venant se visser dans ladite âme creuse filetée et prendre appui au moyen de sa tête (710) sur la deuxième extrémité débouchante (113) dudit manchon (110) de façon à maintenir ladite première extrémité débouchante (112) en appui contre la jante (300) et fixer ainsi le boîtier (100) à cette dernière.

2. Dispositif (D) selon la revendication 1, **CARACTÉRISÉ PAR LE FAIT QUE**
ledit boîtier (100) est préformé de façon à proposer deux plans d'accueil (P1, P2) différents parallèles superposés,
un premier plan d'accueil (P1) accueillant la carte électronique (500) et un deuxième plan d'accueil (P2) accueillant la batterie (600).

3. Dispositif (D) selon la revendication 1 ou 2, **CARACTÉRISÉ PAR LE FAIT QUE** ledit boîtier (100) est préformé d'une ouverture latérale pour autoriser le glissement latéral vers l'axe de la valve (200) de la carte électronique (500) et de la batterie (600) dans leur plan d'accueil respectif (P1, P2).

4. Dispositif (D) selon la revendication 1, **CARACTÉRISÉ PAR LE FAIT QUE** ledit boîtier (100) est préformé pour que les plans d'accueil (P1, P2) présentent un angle inférieur à 90 degrés par rapport à l'axe de la valve (200).

5. Dispositif (D) selon la revendication 1, **CARACTÉRISÉ PAR LE FAIT QUE** la première extrémité débouchante (112) du manchon (110) est préformée d'au moins une encoche (114) avec laquelle coopère au moins une saillie (810) préformée dans une coupelle d'adaptation (800) additionnelle venant, en s'emmanchant sur ladite première extrémité débouchante (112), élargir la surface d'appui de la première extrémité débouchante (112) contre la jante (300).

6. Dispositif (D) selon la revendication 1, **CARACTÉRISÉ PAR LE FAIT QUE** ledit boîtier (100) et ladite coupelle (800) sont réalisés en polyamide chargé à 50 % en fibres.

7. Dispositif (D) selon la revendication 1, **CARACTÉRISÉ PAR LE FAIT QU'**une rondelle ressort (711) s'intercale entre la tête (710) de la vis (700) et la deuxième extrémité débouchante (113) du manchon (110).

8. Dispositif (D) selon la revendication 1, **CARACTÉRISÉ PAR LE FAIT QUE** l'âme creuse (101) du boîtier (100) est préformée de rainures (104, 105) disposées en vis-à-vis pour former un plan d'accueil (P1) et les surfaces de glissement pour le positionnement des différents composants, la paroi extérieure du boîtier (100) étant préformée de nervures (106, 107) au niveau desdites rainures (104, 105).

9. Dispositif (D) selon la revendication 1, **CARACTÉRISÉ PAR LE FAIT QUE** ledit boitier (100) est préformé pour présenter une géométrie allongée avec une extrémité préformée dudit manchon (110) et une deuxième extrémité (103) ouverte pour autoriser le glissement des différents composants avant remplissage par une matière polymère.

## Patentansprüche

1. Radüberwachungsvorrichtung (D),
wobei das Rad einen Reifen aufweist, der auf einer Felge (300) montiert ist, die mit einem Ventil (200) ausgestattet ist, das einen äußeren Abschnitt (210) und einen inneren Abschnitt (220) aufweist, der in den Reifen mündet,
wobei die Vorrichtung (D) von dem Typ ist, der ein Gehäuse (100) aufweist, in dem ein Hohlraum (101) gebildet ist, der verschiedene Komponenten, einschließlich einer elektronischen Karte (500) und einer Batterie (600) zur Versorgung der Karte (500), aufnimmt,
wobei die elektronische Karte (500) mehrere Funktionsmodule, einschließlich eines Messmoduls und eines Modul zum Übertragen der gemessenen Information, umfassend eine Antenne (510), aufweist,
wobei das Gehäuse (100) im Inneren des Reifens angeordnet ist und an dem inneren Abschnitt (220) des Ventils (200) mittels einer Schraubverbindung befestigt ist,
wobei ein Polymermaterial das freie Volumen füllt,
wobei das Gehäuse (100) derart vorgeformt ist, um mindestens zwei verschiedene übereinanderliegende parallele Aufnahmeebenen (P1, P2) bereitzustellen, auf denen die verschiedenen Komponenten verteilt sind,
wobei das Gehäuse (100) derart vorgeformt ist, um eine seitliche Öffnung aufzuweisen, um das seitliche Gleiten der verschiedenen Komponenten in ihre jeweilige Aufnahmeebene (P1, P2) zu ermöglichen,
**DADURCH GEKENNZEICHNET, DASS** das Gehäuse (100) mit einer Muffe (110) vorgeformt ist, in der ein hohler zylindrischer Kern ausgebildet ist, die auf den inneren Abschnitt (220) des Ventils (200) aufgeschoben wird,
die Muffe (110) zwei Mündungsenden (112, 113) aufweist, wobei ein erstes Mündungsende (112) gegen die Oberfläche der Felge (300) in Anlage kommt, sobald die Muffe (110) auf den inneren Abschnitt (220) des Ventils (200) aufgeschoben worden ist,
der innere Abschnitt (220) des Ventils mit einem hohlen Kern mit Gewinde versehen ist,
wobei eine Schraube (700), die mit einem Kopf (710) ausgestattet ist, in den hohlen Kern mit Gewinde geschraubt wird und mit Hilfe ihres Kopfes (710) auf dem zweiten Mündungsende (113) der Muffe (110) derart in Anlage kommt, um das erste Mündungsende (112) in Anlage gegen die Felge (300) zu halten und auf diese Weise das Gehäuse (100) an dieser Letzteren zu befestigen.

2. Vorrichtung (D) nach Anspruch 1, **DADURCH GEKENNZEICHNET, DASS**
das Gehäuse (100) derart vorgeformt ist, um zwei verschiedene übereinanderliegende parallele Aufnahmeebenen (P1, P2) bereitzustellen,
wobei eine erste Aufnahmeebene (P1) die elektronische Karte (500) aufnimmt und eine zweite Aufnahmeebene (P2) die Batterie (600) aufnimmt.

3. Vorrichtung (D) nach Anspruch 1 oder 2, **DADURCH GEKENNZEICHNET, DASS** das Gehäuse (100) mit einer seitlichen Öffnung derart vorgeformt ist, um das seitliche Gleiten in Richtung der Achse des Ventils (200) der elektronischen Karte (500) und der Batterie (600) in ihrer jeweiligen Aufnahmeebene (P1, P2) zu ermöglichen.

4. Vorrichtung (D) nach Anspruch 1, **DADURCH GEKENNZEICHNET, DASS** das Gehäuse (100) vorgeformt ist, damit die Aufnahmeebenen (P1, P2) einen Winkel in Bezug auf die Achse des Ventils (200) von weniger als 90 Grad aufweisen.

5. Vorrichtung (D) nach Anspruch 1, **DADURCH GEKENNZEICHNET, DASS** das erste Mündungsende (112) der Muffe (110) mit mindestens einer Kerbe (114) vorgeformt ist, mit der mindestens ein Vorsprung (810) zusammenwirkt, der in einer zusätzlichen Anpassungsschale (800) vorgeformt ist, die, indem sie auf das erste Mündungsende (112) aufgeschoben wird, die Anlagefläche des ersten Mündungsendes (112) gegen die Felge (300) erweitert.

6. Vorrichtung (D) nach Anspruch 1, **DADURCH GEKENNZEICHNET, DASS** das Gehäuse (100) und die Schale (800) aus 50 % faserverstärktem Polyamid bestehen.

7. Vorrichtung (D) nach Anspruch 1, **DADURCH GEKENNZEICHNET, DASS** eine Tellerfeder (711) zwischen dem Kopf (710) der Schraube (700) und dem zweiten Mündungsende (113) der Muffe (110) angeordnet ist.

8. Vorrichtung (D) nach Anspruch 1, **DADURCH GEKENNZEICHNET, DASS** der Hohlraum (101) des Gehäuses (100) derart vorgeformt ist, um Nuten (104, 105) aufzuweisen, die einander gegenüberliegend angeordnet sind, um eine Aufnahmeebene (P1) und die Gleitflächen zum Positionieren der verschiedenen Komponenten zu bilden, wobei die Außenwand des Gehäuses (100) derart vorgeformt ist, um Rippen (106, 107) auf Ebene der Nuten (104, 105) aufzuweisen.

9. Vorrichtung (D) nach Anspruch 1, **DADURCH GEKENNZEICHNET, DASS** das Gehäuse (100) vorgeformt ist, um eine längliche Geometrie mit einem Ende, das derart vorgeformt ist, um die Muffe (110) aufzuweisen, und einem zweiten offenen Ende (103) aufzuweisen, um das Gleiten der verschiedenen Komponenten vor dem Füllen mit einem Polymermaterial zu ermöglichen.

## Claims

1. Wheel monitoring device (D),
said wheel comprising a tire mounted on a rim (300) fitted with a valve (200) comprising an external portion (210) and an internal portion (220) opening up into the tire,
said device (D) being of the type comprising a housing (100) in which a hollow core (101) is formed, accommodating various components including an electronic board (500) and a power supply battery (600) for said board (500),
said electronic board (500) comprising a plurality of functional modules including a measurement module and a measured information transmission module including an antenna (510),
said housing (100) being positioned inside the tire and fixed to the internal portion (220) of said valve (200) by means of a screwed connection,
a polymer material which fills the free volume,
the housing (100) being preformed so as to provide at least two different superimposed parallel installation planes (P1, P2) on which the various components are distributed,
said housing (100) being preformed so as to exhibit a lateral opening to enable the various components to slide laterally into their respective installation plane (P1, P2),
**CHARACTERIZED BY** THE FACT THAT said housing (100) is preformed with a sleeve (110) in which a cylindrical hollow core (111) is formed, said sleeve fitting onto the internal portion (220) of the valve (200),
said sleeve (110) comprises two open ends (112, 113), a first open end (112) bearing on the surface of the rim (300) once the sleeve (110) has been fitted onto the internal portion (220) of the valve (200),
the internal portion (220) of the valve is provided with a threaded hollow core,
a screw (700) fitted with a head (710) being screwed into said hollow threaded core and bearing by means of its head (710) on the second open end (113) of said sleeve (110) so as to hold said first open end (112) bearing on the rim (300) and thus fix the housing (100) to the latter.

2. Device (D) according to claim 1, **CHARACTERIZED BY** THE FACT THAT
said housing (100) is preformed so as to provide two different superimposed parallel installation planes (P1, P2),
a first installation plane (P1) accommodating the electronic board (500) and a second installation plane (P2) accommodating the battery (600).

3. Device (D) according to claim 1 or 2, **CHARACTERIZED IN THAT** said housing (100) is preformed with a side opening to enable lateral sliding of the electronic board (500) and the battery (600) towards the axis of the valve (200), into their respective installation plane (P1, P2).

4. Device (D) according to claim 1, **CHARACTERIZED IN THAT** said housing (100) is preformed such that the angle between the installation planes (P1, P2) and the axis of the valve (200) is less than 90 degrees.

5. Device (D) according to claim 1, **CHARACTERIZED IN THAT** the first open end (112) of the sleeve (110) is preformed with at least one notch (114) with which cooperates at least one projection (810) preformed in an additional adapter cup (800), which cup, by fitting onto said first open end (112), widens the bearing surface of the first open end (112) against the rim (300).

6. Device (D) according to claim 1, **CHARACTERIZED IN THAT** said housing (100) and said cup (800) are made of 50% fiber-charged polyamide.

7. Device (D) according to claim 1, **CHARACTERIZED BY** THE FACT THAT a spring washer (711) is inserted between the head (710) of the screw (700) and the second open end (113) of the sleeve (110).

8. Device (D) according to claim 1, **CHARACTERIZED IN THAT** the hollow core (101) of the housing (100) is preformed so as to exhibit grooves (104, 105) facing each other to form an installation plane (P1) and the sliding surfaces for positioning the various components, the external wall of the housing (100) being preformed so as to exhibit ribs (106, 107) at said grooves (104, 105).

9. Device (D) according to claim 1, **CHARACTERIZED IN THAT** said housing (100) is preformed so as to exhibit an elongated geometry with one end preformed so as to form said sleeve (110) and a second open end (103) to enable sliding of the various components before filling with a polymer material.
